# EUROPEAN PATENT APPLICATION

(11) **EP 4 693 846 A1**
(43) Date of publication of application: **11.02.2026**
(21) Application number: 24779659.2
(22) Date of filing: 18.03.2024
(51) Int. Cl.: H02K 15/06, H02K 15/04

(54) **ALIGNMENT DEVICE FOR RECTANGULAR WIRE COIL**

(30) Priority: 24.03.2023 JP 2023049069
(71) Applicant: NHK Spring Co., Ltd., Kanagawa 236-0004 (JP)
(72) Inventor: UEDA, Ryosuke, Yokohama-shi, Kanagawa 236-0004 (JP); OMATA, Hiromasa, Yokohama-shi, Kanagawa 236-0004 (JP); MURAYAMA, Masakazu, Himeji-shi, Hyogo 679-2122 (JP)
(74) Representative: DREISS Patentanwälte PartG mbB
(86) International application number: PCT/JP2024/010535
(87) International publication number: WO 2024/203534

(57) **Abstract**

Plural groove portions (36) are formed at a portion at radial direction outer sides of penetration portions (34) of an alignment jig (20) that is provided at a rectangular wire coil alignment device (10). The groove portions (36) are respectively disposed at positions, with respect to predetermined penetration portions (34), at predetermined intervals toward another circumferential direction side from the predetermined penetration portions (34), and are open at radial direction outer sides thereof. Further, each groove portion (36) is capable of accommodating another leg portion (16A) of a rectangular wire coil (16), and is capable of restricting movement of the leg portion (16A) toward a radial direction inner side.

## Description

### Technical Field

The present disclosure relates to a rectangular wire coil alignment device.

### Background Art

Japanese Patent Application Laid-Open (JP-A) No. 2004-173357 discloses an invention relating to an annular alignment device for coil segments. In this annular alignment device, plural housing grooves are provided along a circumferential direction at an outer peripheral portion of an alignment annular pallet. One leg portion of a segment coil (a rectangular wire coil), configuring a portion of a stator, is inserted into a housing groove, and the alignment annular pallet is rotated, whereby the plural segment coils are aligned.

### SUMMARY OF INVENTION

### Technical Problem

Incidentally, it is conceivable that, if a housing groove is large with respect to a leg portion of a segment coil, a posture of the segment coil will be affected.

In this regard, in the above-mentioned prior art, in a process of aligning plural segment coils, one leg portion of a segment coil that has been inserted earlier and another leg portion of a segment coil that has been inserted later are housed in one housing groove. That is to say, the housing groove is configured to have a size in which two leg portions are housed, and the above-mentioned prior art has room for improvement from the perspective of stabilizing a posture of the segment coil within the housing groove.

In consideration of the above circumstances, an object of the present disclosure is to obtain a rectangular wire coil alignment device that is capable of stabilizing a posture of a rectangular wire coil during manufacturing of a stator.

### Solution to Problem

A rectangular wire coil alignment device according to a first aspect includes an alignment jig that has a plate shape with a circular outer circumference and that can rotate toward one circumferential direction side due to being driven, wherein: plural penetration portions are formed in a circumferential direction at a portion at a radial direction outer side of the alignment jig, each penetration portion being provided due to the alignment jig being penetrated in a thickness direction of the alignment jig, and each penetration portion being capable of supporting one leg portion of a rectangular wire coil including a pair of leg portions and a crank portion that links one sides of the leg portions to each other, in a state in which the one leg portion has been inserted through the penetration portion and in a state in which the one leg portion can rotate within an inner peripheral face of the penetration portion; and groove portions are formed at a portion of the alignment jig at radial direction outer sides of the penetration portions, the groove portions respectively being open at the radial direction outer sides at positions, with respect to the penetration portions, at predetermined intervals toward another circumferential direction side from the penetration portions, and each groove portion being capable of accommodating another leg portion and being capable of restricting movement of the other leg portion toward a radial direction inner side.

According to the present aspect, the alignment jig, which has the plate shape with the circular outer circumference and can rotate toward the one circumferential direction side due to being driven, is provided. Further, the penetration portions are formed at the portion at the radial direction outer side of the alignment jig due to the alignment jig being penetrated in the thickness direction of the alignment jig, and the plural penetration portions are disposed in the circumferential direction of the alignment jig.

Thus, in the present aspect, by repeating a series of operations of inserting one leg portion of a rectangular wire coil, which includes a pair of leg portions and a crank portion that links one sides of the leg portions to each other, through a penetration portion and rotating the alignment jig toward the one circumferential direction side, plural rectangular wire coils can be aligned in an annular shape as viewed from the thickness direction of the alignment jig.

Incidentally, when a configuration is employed in which one leg portion of a rectangular wire coil inserted earlier and another leg portion of a rectangular wire coil inserted later are accommodated at one penetration portion in a process of aligning plural rectangular wire coils, that is to say, a configuration in which two leg portions are accommodated at one penetration portion, it is considered that it becomes difficult to stabilize a posture of the rectangular wire coil having the leg portion that is inserted into the penetration portion earlier.

In this regard, in the present aspect, the penetration portions of the alignment jig are each configured such that, in a state in which one leg portion of a rectangular wire coil is inserted therethrough, the leg portion can be supported at the inner peripheral face thereof in a rotatable state, and thus, when the one leg portion of the rectangular wire coil has been inserted through the penetration portion, the leg portion is supported at the inner peripheral face.

Further, in the present aspect, the plural groove portions are formed at the portion of the alignment jig at the radial direction outer sides of the penetration portions. These groove portions are respectively disposed at positions, with respect to the penetration portions, at predetermined intervals toward the other alignment jig circumferential direction side from the penetration portions, and are open at the alignment jig radial direction outer side. Further, each groove portion is capable of accommodating another leg portion of a rectangular wire coil, and is capable of restricting movement of the other leg portion toward the alignment jig radial direction inner side.

Thus, in the present aspect, in a state in which one leg portion of a rectangular wire coil is inserted through a penetration portion of the alignment jig, when the alignment jig is rotated toward the one circumferential direction side thereof, the rectangular wire coil is rotated relatively with respect to the alignment jig about the one leg portion as an axis, and the other leg portion of the rectangular wire coil is accommodated at a groove portion of the alignment jig. Further, the groove portion restricts movement of the other leg portion of the rectangular wire coil toward the alignment jig radial direction inner side.

Thus, in the present aspect, one leg portion of a rectangular wire coil is accommodated in each of the penetration portions and the groove portions of the alignment jig during alignment of plural rectangular wire coils. As a result, compared to a configuration in which two leg portions are accommodated in a single penetration portion during alignment of plural rectangular wire coils, a size of the penetration portions when viewed from the thickness direction of the alignment jig can be reduced, and tilting of a leg portion that has been inserted into a penetration portion can be suppressed.

A rectangular wire coil alignment device according to a second aspect is the rectangular wire coil alignment device according to the first aspect, wherein the penetration portions are circular or arc-shaped as viewed from the thickness direction.

According to the present aspect, the penetration portions of the alignment jig are circular or arc-shaped as viewed from the thickness direction of the alignment jig. Thus, as described above, when the rectangular wire coil rotates relatively with respect to the alignment jig about the one leg portion that has been inserted into the penetration portion as an axis, hinderance of rotation of the rectangular wire coil by the inner peripheral face of the penetration portion can be suppressed.

A rectangular wire coil alignment device according to a third aspect is the rectangular wire coil alignment device according to the second aspect, wherein the penetration portions and the groove portions are disposed such that they partially overlap with each other as viewed from the radial direction, and are in communication with each other in the radial direction.

According to the present aspect, the penetration portions and the groove portions of the alignment jig are disposed such that they partially overlap with each other as viewed from the radial direction of the alignment jig, and are in communication with each other in the radial direction. Thus, a leg portion of one rectangular wire coil and a leg portion of another rectangular wire coil can be brought into proximity to each other in the radial direction of the alignment jig when the plural rectangular wire coils are aligned.

A rectangular wire coil alignment device according to a fourth aspect is the rectangular wire coil alignment device according to any one of the first aspect to the third aspect, wherein: each groove portion is configured to include a first side face portion that configures a portion at the radial direction inner side of the groove portion, a second side face portion that extends toward the radial direction outer side from a peripheral edge portion at the one circumferential direction side of the first side face portion, and a third side face portion that extends toward the radial direction outer side from a peripheral edge portion at the other circumferential direction side of the first side face portion; and, as viewed from the thickness direction, a distance, in the circumferential direction, from a center of the penetration portion to the second side face portion is set to be a longer distance than a distance, in the circumferential direction, from the center to the third side face portion.

According to the present aspect, each groove portion of the alignment jig is configured to include the first side face portion that configures the portion at the alignment jig radial direction inner side of the groove portion, the second side face portion that extends toward the radial direction outer side from the peripheral edge portion at the one alignment jig circumferential direction side of the first side face portion, and the third side face portion that extends toward the radial direction outer side from the peripheral edge portion at the other circumferential direction side of the first side face portion. That is to say, each groove portion has a U-shape that is open at the alignment jig radial direction outer side as viewed from the thickness direction of the alignment jig.

Further, in the present aspect, as viewed from the thickness direction of the alignment jig, the distance, in the circumferential direction of the alignment jig, from the center of the penetration portion to the second side face portion of the groove portion is set to be a longer distance than the distance, in the circumferential direction of the alignment jig, from the center to the third side face portion of the groove portion.

Thus, as described above, when the rectangular wire coil rotates relatively with respect to the alignment jig about the one leg portion as an axis, and the other leg portion of the rectangular wire coil is accommodated at the groove portion, interference between the leg portion and a portion at the second side face portion side of the groove portion can be suppressed.

A rectangular wire coil alignment device according to a fifth aspect is the rectangular wire coil alignment device according to the fourth aspect, wherein a fourth side face portion that extends toward the radial direction outer side and toward the one circumferential direction side from a peripheral edge portion at the radial direction outer side of the second side face portion is provided at the one circumferential direction side of each groove portion.

According to the present aspect, the fourth side face portion that extends toward the radial direction outer side and toward the one circumferential direction side from the peripheral edge portion at the alignment jig radial direction outer side of the second side face portion of the groove portion is provided at the one alignment jig circumferential direction side of each groove portion.

Thus, as described above, when the rectangular wire coil rotates relatively with respect to the alignment jig about the one leg portion as an axis, and the other leg portion of the rectangular wire coil is accommodated at the groove portion, the leg portion moves along the fourth side face portion. As a result, in the present aspect, interference between the other leg portion of the rectangular wire coil and the portion at the second side face portion side of the groove portion can be further suppressed.

A rectangular wire coil alignment device according to a sixth aspect is the rectangular wire coil alignment device according to the third aspect, wherein each groove portion is configured to include a first side face portion that configures a portion at the radial direction inner side of the groove portion, and a second side face portion having a curved face shape that extends toward the radial direction outer side and toward the one circumferential direction side from a peripheral edge portion at the one circumferential direction side of the first side face portion and that is convex toward the other circumferential direction side.

According to the present aspect, each groove portion of the alignment jig is configured to include the first side face portion that configures the portion at the alignment jig radial direction inner side of the groove portion, and the second side face portion having the curved face shape that extends toward the radial direction outer side and toward the one circumferential direction side from the peripheral edge portion at the one alignment jig circumferential direction side of the first side face portion and that is convex toward the other circumferential direction side.

Thus, as described above, when the rectangular wire coil is rotated relatively with respect to the alignment jig about the one leg portion as an axis, and the other leg portion of the rectangular wire coil is accommodated at the groove portion, the second side face portion can be prevented from inhibiting displacement of the leg portion, even if there is interference between the leg portion and the portion at the second side face portion side of the groove portion.

A rectangular wire coil alignment device according to a seventh aspect is the rectangular wire coil alignment device according to any one of the first aspect to the sixth aspect, wherein an inclined face portion is provided at a portion at one thickness direction side of each penetration portion and each groove portion, the inclined face portion being provided so as to overlap with a center of the penetration portion as viewed from the thickness direction, and so as to overlap with a conical face having an apex at a position that is positioned at another thickness direction side with respect to edge portions at the one thickness direction side of the penetration portion and the groove portion.

According to the present aspect, the inclined face portion is provided at a portion of the alignment jig at the one alignment jig thickness direction side of the penetration portion and the groove portion. The inclined face portion is provided so as to overlap with the center of the penetration portion as viewed from the alignment jig thickness direction, and so as to overlap with the conical face having the apex at the position that is positioned at the other thickness direction side with respect to the edge portions at the one thickness direction side of the penetration portion and the groove portion. Thus, in the present aspect, the inclined face portion can be used as a guide for the leg portion when the one leg portion of the rectangular wire coil is inserted into the penetration portion from the one alignment jig thickness direction side.

### Advantageous Effects of Invention

As explained above, the rectangular wire coil alignment device according to the present disclosure has an excellent effect in that a posture of a rectangular wire coil can be stabilized during manufacturing of a stator.

### BRIEF DESCRIPTION OF DRAWINGS

Fig. 1 is a perspective view schematically illustrating a state during manufacturing of a stator that is manufactured using a rectangular wire coil alignment device according to the present exemplary embodiment.
Fig. 2 is a plan view schematically illustrating a configuration of a rectangular wire coil configuring a portion of the stator that is manufactured using the rectangular wire coil alignment device according to the present exemplary embodiment.
Fig. 3 is a plan view schematically illustrating a configuration of a rectangular wire coil configuring a portion of the stator that is manufactured using the rectangular wire coil alignment device according to the present exemplary embodiment.
Fig. 4 is a front view schematically illustrating a configuration of the rectangular wire coil alignment device according to the present exemplary embodiment.
Fig. 5 is a plan view schematically illustrating a configuration of the rectangular wire coil alignment device according to the present exemplary embodiment.
Fig. 6 is a plan view schematically illustrating a configuration of an alignment jig configuring a portion of the rectangular wire coil alignment device according to the present exemplary embodiment.
Fig. 7 is an enlarged plan view schematically illustrating a configuration of relevant portions of the alignment jig configuring a portion of the rectangular wire coil alignment device according to the present exemplary embodiment.
Fig. 8A is a diagram schematically illustrating a state directly after a rectangular wire coil has been inserted into the alignment jig in a rectangular wire coil alignment process by the rectangular wire coil alignment device according to the present exemplary embodiment.
Fig. 8B is a diagram schematically illustrating a movement state of the rectangular wire coil in the rectangular wire coil alignment process by the rectangular wire coil alignment device according to the present exemplary embodiment.
Fig. 8C is a diagram schematically illustrating a positioning state of the rectangular wire coil in the rectangular wire coil alignment process by the rectangular wire coil alignment device according to the present exemplary embodiment.
Fig. 9 is an enlarged plan view schematically illustrating a configuration of relevant portions of an alignment jig configuring a portion of a rectangular wire coil alignment device according to a first modified example of the present exemplary embodiment.
Fig. 10 is an enlarged plan view schematically illustrating a configuration of relevant portions of an alignment jig configuring a portion of a rectangular wire coil alignment device according to a second modified example of the present exemplary embodiment.

### DESCRIPTION OF EMBODIMENTS

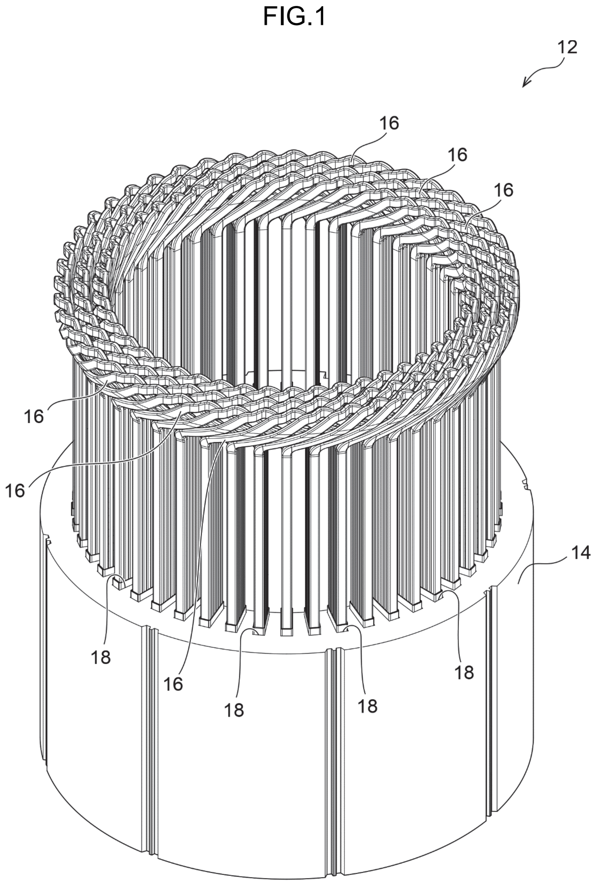

An example of an exemplary embodiment of a rectangular wire coil alignment device according to the present disclosure will be explained below with reference to Figs. 1 to 10. First, a configuration of a stator 12 for which a portion of a manufacturing process thereof is performed in a rectangular wire coil alignment device 10 (hereinafter referred to as an alignment device 10) according to the present exemplary embodiment.

The stator 12 configures a portion of a motor together with a rotor and the like, which are not illustrated in the drawings, and as illustrated in Fig. 1, the stator 12 includes a stator core 14 serving as a base thereof, and plural rectangular wire coils 16.

The stator core 14 is configured in a cylindrical shape by stacking plural electromagnetic steel plates, and plural slots 18 are formed at an inner peripheral portion of the stator core 14. These slots 18 are groove portions that are open in an axial direction of the stator core 14 and toward a radial direction inner side of the stator core 14. It should be noted that in the following, unless specifically stated otherwise, the axial direction of the stator core 14 is simply referred to as the axial direction, the radial direction of the stator core 14 is simply referred to as the radial direction, and the circumferential direction of the stator core 14 is simply referred to as the circumferential direction.

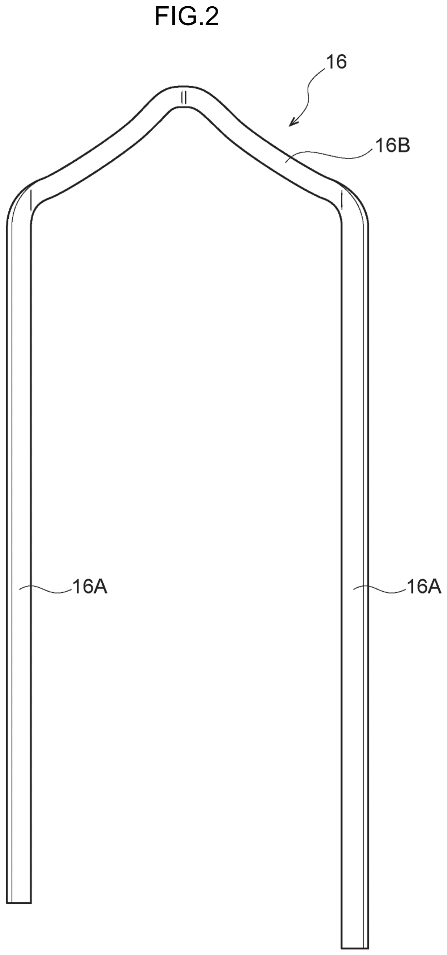

As illustrated in Fig. 2, the rectangular wire coil 16 is formed by bending a rectangular wire made of copper or the like into a U-shape, and includes a pair of leg portions 16A that extend parallel to each other, and a crank portion 16B that links extension direction one sides of the leg portions 16A to each other.

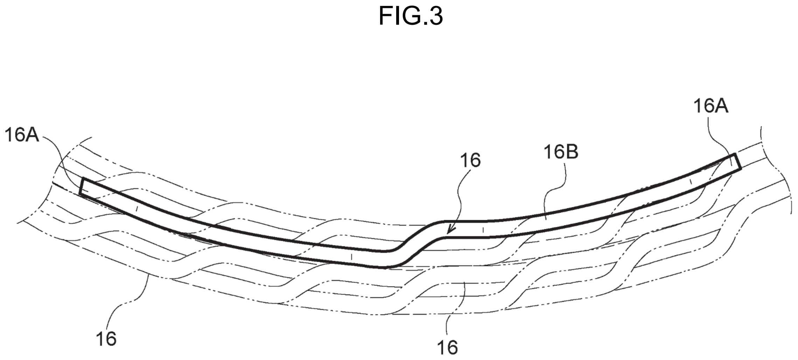

More specifically, the leg portions 16A extend linearly in the axial direction, and, as illustrated in Fig. 3, although the crank portion 16B extends along the circumferential direction as a whole, a portion of the crank portion 16B that is approximately half thereof at one circumferential direction side is positioned further toward a radial direction inner side than a portion of the crank portion 16B that is approximately half thereof at the other circumferential direction side. That is to say, the leg portion 16A at the one circumferential direction side is positioned further toward the radial direction inner side than the leg portion 16A at the other circumferential direction side.

Returning to Fig. 1, the leg portions 16A of the rectangular wire coils 16 are respectively inserted into the respective slots 18 of the stator core 14 from one axial direction side, and are disposed so as to be lined up in pluralities in the circumferential direction and the radial direction. In a state in which the plural rectangular wire coils 16 are disposed at the stator core 14, they attain a state in which they are aligned in an annular shape when viewed from the axial direction.

Specifically, the plural rectangular wire coils 16 configure a single annular layer as viewed from the axial direction, due to being disposed lined up in the circumferential direction such that one leg portion 16A of one rectangular wire coil 16 and one leg portion 16A of another rectangular wire coil 16 are adjacent to each other in the radial direction, in a state in which they are convex toward a radial direction outer side as viewed from the axial direction.

In the present exemplary embodiment, before insertion of the rectangular wire coils 16 into the stator core 14 is carried out, an assembly of the rectangular wire coils 16 that have been aligned in an annular shape by the alignment device 10 is configured, and the plural rectangular wire coils 16 are attached to the stator core 14 in an assembled state. The configuration of the alignment device 10 will be explained in detail below.

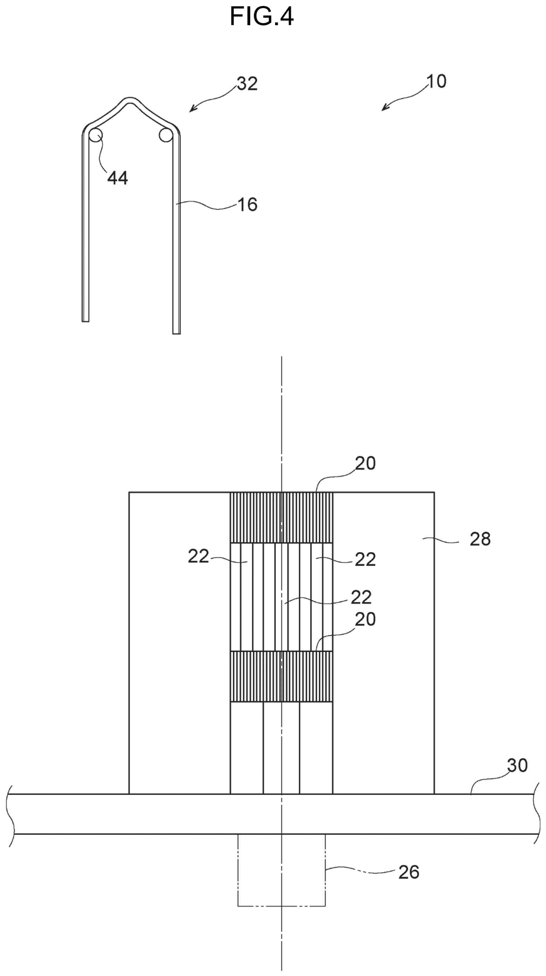

As illustrated in Fig. 4, the alignment device 10 includes a pair of alignment jigs 20, coupling shaft portions 22, a drive shaft portion 24, a drive portion 26, a guide tube portion 28, a support base 30, and a coil insertion portion 32.

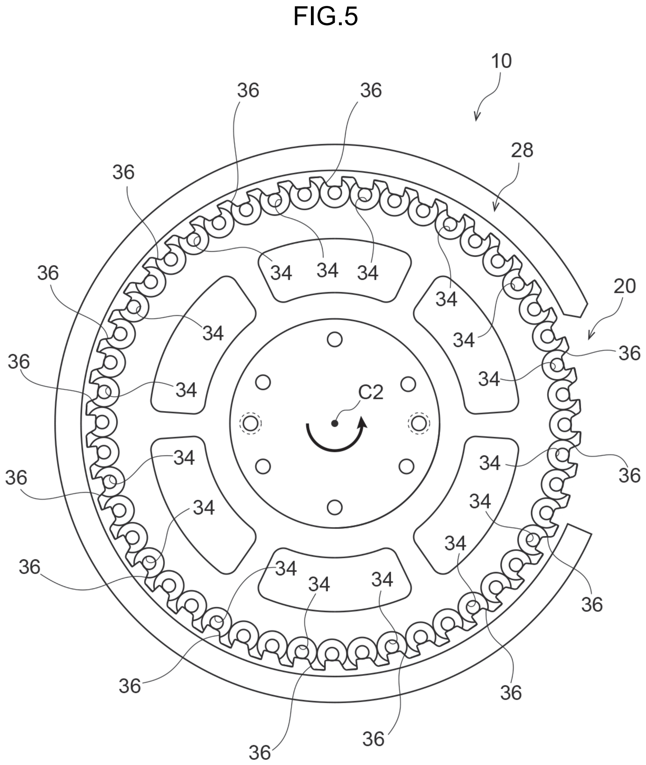

As illustrated in Fig. 5, a general shape of each alignment jig 20 is a plate shape having a circular outer circumference, and the alignment jig 20 is disposed with a thickness direction thereof being along a height direction of the alignment device 10. Further, plural penetration portions 34 and plural groove portions 36 into which the leg portions 16A of the rectangular wire coils 16 can be inserted are formed at a portion at a radial direction outer side of the alignment jig 20. It should be noted that in the following, unless specifically stated otherwise, the height direction of the alignment device 10 is simply referred to as the height direction, the thickness direction of the alignment jig 20 is simply referred to as the thickness direction, the radial direction of the alignment jig 20 is simply referred to as the radial direction, and the circumferential direction of the alignment jig 20 is simply referred to as the circumferential direction. Further, one thickness direction side corresponds to a height direction upper side.

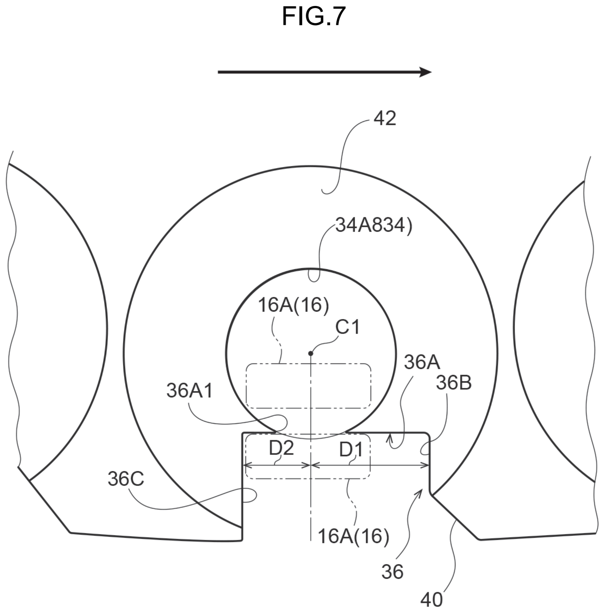

More specifically, the penetration portions 34 are disposed at predetermined intervals in the circumferential direction with respect to each other, and are provided by penetrating the alignment jig 20 in the thickness direction. It should be noted that the penetration portions 34 are circular as viewed from the thickness direction. As also illustrated in Fig. 7, in a state in which a leg portion 16A has been inserted through a penetration portion 34, a portion of the leg portion 16A contacts an inner peripheral face 34A of the penetration portion 34. That is to say, the penetration portion 34 is capable of supporting the leg portion 16A at the inner peripheral face 34A. It should be noted that a state in which a leg portion 16A is supported by a penetration portion 34 as referred to herein may also include a state in which the leg portion 16A is tilted with respect to the height direction within the penetration portion 34, as long as no problem arises with regard to rotation or alignment of the rectangular wire coil 16.

Meanwhile, the groove portions 36 are provided at peripheral edge portions at radial direction outer sides of the penetration portions 34 in the alignment jig 20, and extend in the thickness direction. Each groove portion 36 is configured to include a first side face portion 36A configuring a portion at a radial direction inner side of the groove portion 36, a second side face portion 36B extending toward a radial direction outer side from a peripheral edge portion at one circumferential direction side of the first side face portion 36A, and a third side face portion 36C extending toward the radial direction outer side from a peripheral edge portion at the other circumferential direction side of the first side face portion 36A. That is to say, each groove portion 36 has a U-shape that is open at the radial direction outer side as viewed from the thickness direction. Further, a width of each groove portion 36 is set to a length such that most of the penetration portion 34 fits therein as viewed from the radial direction.

Further, as viewed from the thickness direction, the inner peripheral face 34A of the penetration portion 34 and the first side face portion 36A of the groove portion 36 intersect with each other, and a slit portion 36A1 extending in the thickness direction is provided at this portion. That is to say, the penetration portion 34 and the groove portion 36 are in a state in which they are in communication with each other in the radial direction, and a shape of the penetration portion 34 as viewed from the thickness direction can also be considered to be an arc shape.

It should be noted that the slit portions 36A1 each have a size that can restrict passage of the leg portions 16A of the rectangular wire coils 16, and in the present exemplary embodiment, a configuration is provided such that movement of the leg portions 16A from the groove portions 36 toward the radial direction inner side, that is to say, toward the penetration portion 34 side, is restricted.

Further, in the present exemplary embodiment, as viewed from the thickness direction, a distance D1, in the circumferential direction, from a center C1 of the penetration portion 34 to the second side face portion 36B of the groove portion 36 is set to be a longer distance than a distance D2, in the circumferential direction, from the center C1 to the third side face portion 36C of the groove portion 36.

Moreover, in the present exemplary embodiment, a guide face portion 40, serving as a fourth side face portion that extends toward the radial direction outer side and toward the one circumferential direction side from a peripheral edge portion at a radial direction outer side of the second side face portion 36B of the groove portion 36, is provided at the one circumferential direction side of the groove portion 36.

Meanwhile, at a portion at the one thickness direction side of the penetration portion 34 and the groove portion 36, an inclined face portion 42 is provided so as to overlap with the center C1 of the penetration portion 34 as viewed from the thickness direction, and so as to overlap with a conical face having an apex at a position that is positioned at the other thickness direction side with respect to edge portions at the one thickness direction side of the penetration portion 34 and the groove portion 36.

As illustrated in Fig. 4, the coupling shaft portions 22 extend in the height direction, are interposed between the pair of alignment jigs 20 that are disposed at a predetermined interval in the height direction, and are fixed to the alignment jigs 20 by attachment members, which are not illustrated in the drawings. Due to being coupled by the coupling shaft portions 22, the pair of alignment jigs 20 are positioned such that, as viewed from the height direction, a center C2 of an alignment jig 20 at the one height direction side and a center C2 of an alignment jig 20 at the other height direction side (refer to Fig. 5) coincide with each other, and centers C1 of penetration portions 34 of the alignment jig 20 at the one height direction side and centers C1 of penetration portions 34 of the alignment jig 20 at the other height direction side coincide with each other.

An end portion of the drive shaft portion 24 at the height direction upper side is fixed to the alignment jig 20 at the height direction lower side by an attachment member, which is not illustrated in the drawings, and an end portion of the drive shaft portion 24 at the height direction lower side is attached to a power shaft portion, which is not illustrated in the drawings, of the drive portion 26 by an attachment member, which is not illustrated in the drawings.

The drive portion 26 includes a motor, which is not illustrated in the drawings, and a gear box, which is not illustrated in the drawings, and is configured so as to be driven by being supplied with electric power from a power source, which is not illustrated in the drawings, and by being controlled by a control section, which is not illustrated in the drawings. Further, the alignment jigs 20 are configured so as to intermittently rotate toward the one circumferential direction side as will be described later, due to being driven by the drive portion 26 that is controlled by the control section.

As illustrated in Fig. 5, although the guide tube portion 28, as a whole, has a cylindrical shape that surrounds outer circumferences of the alignment jigs 20, a slit portion 28A that extends in the height direction is provided at the guide tube portion 28, and the guide tube portion 28 is configured in a C-shape as viewed from the height direction. Further, when the slit portion 28A is viewed from the radial direction outer side, plural (seven in the present exemplary embodiment as an example) groove portions 36 are exposed at the slit portion 28A. It should be noted that one circumferential direction end portion of the guide tube portion 28, that is to say, a portion configuring a portion at one circumferential direction side of the slit portion 28A, has a tapered shape that is reduced in width toward the other circumferential direction end portion of the guide tube portion 28, that is to say, toward a portion configuring a portion at the other circumferential direction side of the slit portion 28A.

Returning to Fig. 4, the support base 30 is disposed at a height direction lower side of the guide tube portion 28, and supports the guide tube portion 28 from the height direction lower side. Further, the support base 30 is coupled to the drive shaft portion 24 via a bearing portion, which is not illustrated in the drawings, and the support base 30 supports the drive shaft portion 24, the coupling shaft portions 22, and the alignment jigs 20 from the height direction lower side via the bearing portion. It should be noted that the drive portion 26 is disposed at a height direction lower side of the support base 30.

Meanwhile, the coil insertion portion 32 includes a pedestal portion 44 at which plural rectangular wire coils 16 are temporarily placed, and a coil moving device, which is not illustrated in the drawings, that moves a rectangular wire coil 16 in the height direction from the rectangular wire coils 16 and inserts one leg portion 16A of the rectangular wire coil 16 into a penetration portion 34.

Further, a control section, which is not illustrated in the drawings, that controls the coil moving device is integrally controlled with the control section of the drive portion 26. Specifically, an initial position of the alignment jig 20 is set at a position at which a penetration portion 34 is at an insertion position, that is to say, a position at which one leg portion 16A of a rectangular wire coil 16 can be inserted into the penetration portion 34 by the coil moving device. Further, the control section of the drive portion 26 stops the drive portion 26 while the coil moving device that has acquired a rectangular wire coil 16 from the pedestal portion 44 installs the rectangular wire coil 16 at the alignment jig 20. On the other hand, while the coil moving device that has installed the rectangular wire coil 16 at the alignment jig 20 returns to an acquisition position at which a rectangular wire coil 16 is acquired from the pedestal portion 44, the control section of the drive portion 26 drives the drive portion 26 to rotate the alignment jig 20 toward the one circumferential direction side until a penetration portion 34, which is adjacent at the other circumferential direction side of the penetration portion 34 into which the leg portion 16A has been inserted, is at the insertion position.

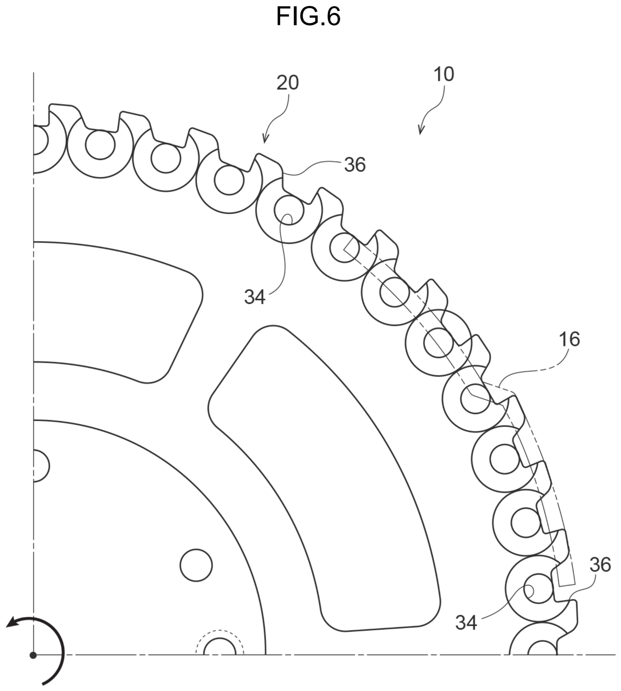

Further, in the present exemplary embodiment, immediately after one leg portion 16A of a rectangular wire coil 16 has been inserted into a penetration portion 34 of the alignment jig 20 by the coil moving device, the other leg portion 16A of the rectangular wire coil 16 is positioned at an outer peripheral side of the guide tube portion 28. On the other hand, in a state in which positioning of the rectangular wire coil 16 with respect to the alignment jig 20 has been completed, as illustrated in Fig. 6, the other leg portion 16A is accommodated at a sixth groove portion 36 toward the other circumferential direction side, counting from a groove portion 36 that is adjacent in the radial direction to the penetration portion 34 into which the one leg portion 16A is inserted. It should be noted that a relative positional relationship between the groove portion 36 at which the one leg portion 16A is accommodated and the groove portion 36 at which the other leg portion 16A is accommodated is appropriately adjusted in accordance with specifications or the like of the rectangular wire coils 16 or the drive portion 26.

That is to say, in the present exemplary embodiment, a configuration is provided in which one rectangular wire coil 16 is positioned according to a combination of the penetration portion 34 and the groove portion 36, which are disposed at predetermined intervals in the circumferential direction.

### <Operation and Effects of the Present Exemplary Embodiment>

Next, operation and effects of the present exemplary embodiment will be explained.

As illustrated in Fig. 5, in the present exemplary embodiment, the alignment jig 20, which has a plate shape with a circular outer circumference and which can rotate toward one circumferential direction side thereof by being driven, is provided. Further, the penetration portions 34 are formed at a portion at the radial direction outer side by penetrating the alignment jig 20 in the thickness direction, and the plural penetration portions 34 are disposed in the circumferential direction.

Thus, in the present exemplary embodiment, by repeating a series of operations of inserting one leg portion 16A of a rectangular wire coil 16 through a penetration portion 34 and rotating the alignment jig 20 toward the one circumferential direction side, the plural rectangular wire coils 16 can be aligned in an annular shape as viewed from the thickness direction.

Incidentally, when a configuration is employed in which one leg portion 16A of a rectangular wire coil 16 inserted earlier and another leg portion 16A of a rectangular wire coil 16 inserted later are accommodated at one penetration portion 34 in a process of aligning plural rectangular wire coils 16, that is to say, a configuration in which two leg portions 16A are accommodated at one penetration portion 34, it is considered that it becomes difficult to stabilize a posture of the rectangular wire coil 16 having the leg portion 16A that is inserted into the penetration portion 34 earlier.

In this regard, in the present exemplary embodiment, the penetration portion 34 is configured such that, in a state in which one leg portion 16A of a rectangular wire coil 16 is inserted therethrough, the leg portion 16A can be supported at the inner peripheral face 34A of the penetration portion 34, and thus, when the one leg portion 16A of the rectangular wire coil 16 has been inserted through the penetration portion 34, the leg portion 16A is supported at the inner peripheral face 34A.

Further, in the present exemplary embodiment, the plural groove portions 36 are formed at portions at radial direction outer sides of the penetration portions 34 in the alignment jig 20. The groove portions 36 are respectively disposed at positions, with respect to predetermined penetration portions 34, that are at predetermined intervals toward the other circumferential direction side from the penetration portions 34, and are open at radial direction outer sides thereof. Further, the groove portions 36 are capable of accommodating the other leg portions 16A of the rectangular wire coils 16, and are capable of restricting movement of the leg portions 16A toward the radial direction inner side.

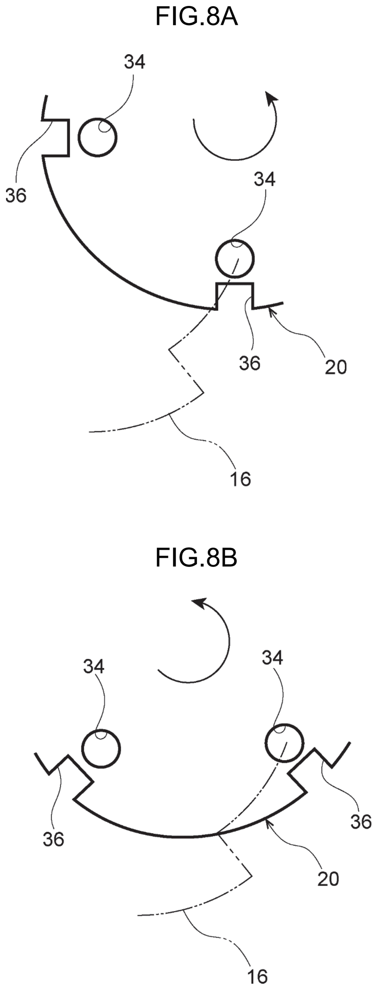

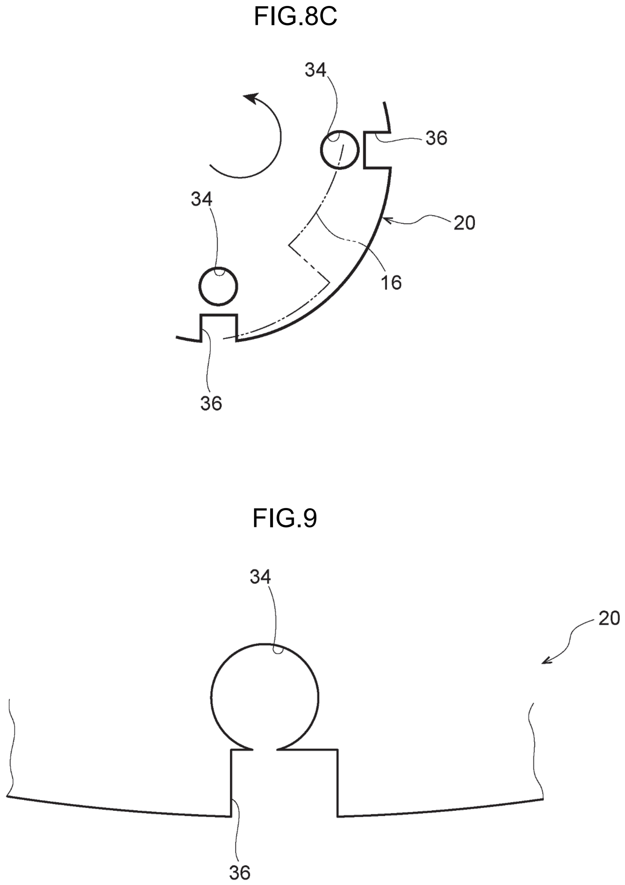

Thus, in the present exemplary embodiment, in a state in which one leg portion 16A of a rectangular wire coil 16 is inserted through a penetration portion 34 as illustrated in Fig. 8A, when the alignment jig 20 is rotated toward the one circumferential direction side, the rectangular wire coil 16 is rotated relatively with respect to the alignment jig 20 about the one leg portion 16A as an axis due to inertia, as illustrated in Fig. 8B. Further, as illustrated in Fig. 8C, the other leg portion 16A of the rectangular wire coil 16 is accommodated at a groove portion 36. It should be noted that, even if the other leg portion 16A of the rectangular wire coil 16 is not completely accommodated at the groove portion 36 due to rotation of the alignment jig 20 alone, the other leg portion 16A is accommodated at the groove portion 36 due to moving along an inner peripheral face of the guide tube portion 28. Further, the groove portion 36 restricts movement of the other leg portion 16A of the rectangular wire coil 16 toward the radial direction inner side of the alignment jig 20.

Thus, in the present exemplary embodiment, a single leg portion 16A of a rectangular wire coil 16 is accommodated in each of the penetration portions 34 and the groove portions 36 of the alignment jig 20 during alignment of the plural rectangular wire coils 16. As a result, compared to a configuration in which two leg portions 16A are accommodated in a single penetration portion 34 during alignment of the plural rectangular wire coils 16, a size of the penetration portions 34 when viewed from the thickness direction can be reduced, and tilting of a leg portion 16A that has been inserted into a penetration portion 34 can be suppressed.

Further, as illustrated in Fig. 7, in the present exemplary embodiment, the penetration portions 34 of the alignment jigs 20 are configured to be circular or arc-shaped as viewed from the thickness direction thereof. Thus, as described above, when the rectangular wire coil 16 rotates relatively with respect to the alignment jig 20 about the one leg portion 16A that has been inserted into the penetration portion 34 as an axis, hinderance of rotation of the rectangular wire coil 16 by the inner peripheral face 34A of the penetration portion 34 can be suppressed.

Further, in the present exemplary embodiment, the penetration portions 34 and the groove portions 36 of the alignment jigs 20 are disposed such that they partially overlap with each other as viewed from the radial direction, and are in communication with each other in the radial direction. Thus, a leg portion 16A of one rectangular wire coil 16 and a leg portion 16A of another rectangular wire coil 16 can be brought into proximity to each other in the radial direction when the plural rectangular wire coils 16 are aligned.

Further, in the present exemplary embodiment, each groove portion 36 of the alignment jigs 20 is configured to include the first side face portion 36A configuring the portion at the radial direction inner side of the groove portion 36, the second side face portion 36B extending toward the radial direction outer side from the peripheral edge portion at the one circumferential direction side of the first side face portion 36A, and the third side face portion 36C extending toward the radial direction outer side from the peripheral edge portion at the other circumferential direction side of the first side face portion 36B.

Further, in the present exemplary embodiment, as viewed from the thickness direction, the distance D1, in the circumferential direction, from the center C1 of the penetration portion 34 to the second side face portion 36B is set to be a longer distance than the distance D2, in the circumferential direction, from the center C1 to the third side face portion 36C.

Thus, as described above, when the rectangular wire coil 16 rotates relatively with respect to the alignment jig 20 about the one leg portion 16A as an axis, and the other leg portion 16A of the rectangular wire coil 16 is accommodated at the groove portion 36, interference between the leg portion 16A and a portion at the second side face portion 36B side of the groove portion 36 can be suppressed.

Further, in the present exemplary embodiment, the guide face portion 40 that extends toward the radial direction outer side and toward the one circumferential direction side from the peripheral edge portion at the radial direction outer side of the second side face portion 36B is provided at the one circumferential direction side of the groove portion 36.

Thus, as described above, when the rectangular wire coil 16 rotates relatively with respect to the alignment jig 20 about the one leg portion 16A as an axis, and the other leg portion 16A of the rectangular wire coil 6 is accommodated at the groove portion 36, the leg portion 16A moves along the guide face portion 40. As a result, in the present exemplary embodiment, interference between the other leg portion 16A of the rectangular wire coil 16 and the portion at the second side face portion 36B side of the groove portion 36 can be further suppressed.

In addition, in the present exemplary embodiment, the inclined face portions 42 are provided at portions at the one thickness direction side of the penetration portions 34 and the groove portions 36 of the alignment jigs 20. As viewed from the thickness direction, each inclined face portion 42 is provided so as to overlap with the center C1 of the penetration portion 34, and so as to overlap with the conical face having an apex at a position that is positioned at the other thickness direction side with respect to the edge portions at the one thickness direction side of the penetration portion 34 and the groove portion 36. Thus, in the present exemplary embodiment, the inclined face portions 42 can be used as guides for the leg portions 16A when the one leg portions 16A of the rectangular wire coils 16 are respectively inserted into the penetration portions 34 from the one thickness direction side.

As explained above, in the alignment device 10 according to the present exemplary embodiment, postures of the rectangular wire coils 16 can be stabilized during manufacturing of the stator 12.

### <First Modified Example>

Next, a first modified example of the above-described exemplary embodiment will be explained with reference to Fig. 9. The first modified example has basically the same configuration as the above-described exemplary embodiment, but the guide face portions 40 and the inclined face portions 42 are not provided at the alignment jigs 20.

Due to such a configuration, the configuration of the alignment jigs 20 can be simplified, thereby contributing to a reduction in manufacturing cost of the alignment device 10.

Further, in the present modified example, the second side face portion 36B may have a curved face shape that extends toward the radial direction outer side and toward the one circumferential direction side from the peripheral edge portion at the one circumferential direction side of the first side face portion 36A, and that is convex toward the other circumferential direction side.

Due to such a configuration, when the rectangular wire coil 16 is rotated relatively with respect to the alignment jig 20 about the one leg portion 16A as an axis, and the other leg portion 16A of the rectangular wire coil 16 is accommodated at the groove portion 36, the second side face portion 36B can be prevented from inhibiting displacement of the leg portion 16A, even if there is interference between the leg portion 16A and a portion at the second side face portion 36B side of the groove portion 36.

### <Second Modified Example>

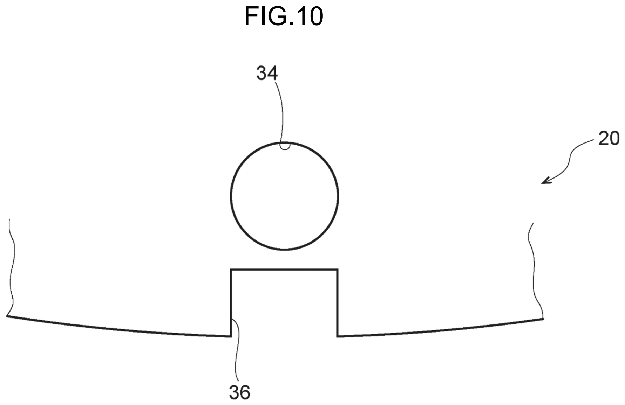

Next, a second modified example of the above-described exemplary embodiment will be explained with reference to Fig. 10. The first modified example has basically the same configuration as the above-described exemplary embodiment, but the guide face portions 40 and the inclined face portions 42 are not provided at the alignment jigs 20. Furthermore, the penetration portions 34 and the groove portions 36 are not in communication with each other, and are provided independently of each other.

Due to such a configuration, the configuration of the alignment jigs 20 can be simplified, and furthermore, rigidity at peripheries of the penetration portions 34 in the alignment jigs 20 can be secured.

It should be noted that, although two alignment jigs 20 are disposed in the above-described exemplary embodiment, a configuration may be employed in which, for example, a thickness of the alignment jig 20 is doubled, and a single alignment jig 20 is provided at the alignment device 10, in accordance with the specifications or the like of the alignment device 10.

Further, the disclosure of Japanese Patent Application No. 2023-049069, filed on March 24, 2023, is hereby incorporated by reference in its entirety. All documents, patent applications, and technical standards described herein are hereby incorporated by reference to the same extent as if each document, patent application, and technical standard had been specifically and individually stated to be incorporated by reference.

## Claims

1. A rectangular wire coil alignment device comprising an alignment jig that has a plate shape with a circular outer circumference and that can rotate toward one circumferential direction side due to being driven, wherein:
a plurality of penetration portions are formed in a circumferential direction at a portion at a radial direction outer side of the alignment jig, each penetration portion being provided due to the alignment jig being penetrated in a thickness direction of the alignment jig, and each penetration portion being capable of supporting one leg portion of a rectangular wire coil including a pair of leg portions and a crank portion that links one sides of the leg portions to each other, in a state in which the one leg portion has been inserted through the penetration portion and in a state in which the one leg portion can rotate within an inner peripheral face of the penetration portion; and
groove portions are formed at a portion of the alignment jig at radial direction outer sides of the penetration portions, the groove portions respectively being open at the radial direction outer sides at positions, with respect to the penetration portions, at predetermined intervals toward another circumferential direction side from the penetration portions, and each groove portion being capable of accommodating another leg portion and being capable of restricting movement of the other leg portion toward a radial direction inner side.

2. The rectangular wire coil alignment device according to claim 1, wherein the penetration portions are circular or arc-shaped as viewed from the thickness direction.

3. The rectangular wire coil alignment device according to claim 2, wherein the penetration portions and the groove portions are disposed such that they partially overlap with each other as viewed from the radial direction, and are in communication with each other in the radial direction.

4. The rectangular wire coil alignment device according to claim 3, wherein:
each groove portion is configured to include a first side face portion that configures a portion at the radial direction inner side of the groove portion, a second side face portion that extends toward the radial direction outer side from a peripheral edge portion at the one circumferential direction side of the first side face portion, and a third side face portion that extends toward the radial direction outer side from a peripheral edge portion at the other circumferential direction side of the first side face portion; and
as viewed from the thickness direction, a distance, in the circumferential direction, from a center of the penetration portion to the second side face portion is set to be a longer distance than a distance, in the circumferential direction, from the center to the third side face portion.

5. The rectangular wire coil alignment device according to claim 4, wherein a fourth side face portion that extends toward the radial direction outer side and toward the one circumferential direction side from a peripheral edge portion at the radial direction outer side of the second side face portion is provided at the one circumferential direction side of each groove portion.

6. The rectangular wire coil alignment device according to claim 3, wherein each groove portion is configured to include a first side face portion that configures a portion at the radial direction inner side of the groove portion, and a second side face portion having a curved face shape that extends toward the radial direction outer side and toward the one circumferential direction side from a peripheral edge portion at the one circumferential direction side of the first side face portion and that is convex toward the other circumferential direction side.

7. The rectangular wire coil alignment device according to claim 5 or claim 6, wherein an inclined face portion is provided at a portion at one thickness direction side of each penetration portion and each groove portion, the inclined face portion being provided so as to overlap with a center of the penetration portion as viewed from the thickness direction, and so as to overlap with a conical face having an apex at a position that is positioned at another thickness direction side with respect to edge portions at the one thickness direction side of the penetration portion and the groove portion.
